# EUROPEAN PATENT APPLICATION

(11) **EP 4 530 164 A1**
(43) Date of publication of application: **02.04.2025**
(21) Application number: 23200809.4
(22) Date of filing: 29.09.2023
(51) Int. Cl.: B62D 55/00, B62D 55/20, B62D 55/075, B62D 55/253, B62D 55/26

(54) **SUSPENSION ARRANGEMENT WITH OMNIDIRECTIONALLY MOVING VEHICLES AND METHOD USING OMNIDIRECTIONALLY MOVING VEHICLES**

(71) Applicant: Ceilix AG, 82049 Pullach i. Isartal (DE)
(72) Inventor: Siedel, Michael Torsten, 53902 Bad Münstereifel (DE)
(74) Representative: Jostarndt Patentanwalts-AG

(57) **Abstract**

The invention relates to suspension arrangements (100) exhibiting at least one crawler type vehicle (10) and a structure (1, 1') extending in at least two spatial directions (x, y), wherein the structure (1, 1') comprises a plurality of profile units (1.1) extending in a first spatial direction (x), wherein the structure (1, 1') defines at least one structural regularity (1a) in a second spatial direction (y), wherein the crawler type vehicle (10) exhibits a plurality of suspension elements (13, 13a, 13b) configured for suspending the crawler type vehicle (10) and configured for coupling the crawler type vehicle (10) to the structure (1, 1') by means of de-/coupling kinematics depending on a relative motion of the crawler type vehicle (10) with respect to the structure (1, 1') in at least said second spatial direction (y), especially with the crawler type vehicle (10) being configured to be moved in said first spatial direction (x) along the profile units (1.1) irrespective of momentary motion in said second spatial direction (y), wherein the crawler type vehicle (10) exhibits at least two drive units (11) and at least one joint, especially a ball joint (14.1).

## Description

The present invention refers to suspension arrangements exhibiting at least one crawler type vehicle. Further, the present invention refers to a method of suspending the unit at a structure and moving units between structures. In particular, the present invention refers to devices and methods according to features of the enclosed independent and dependent claims.

### BACKGROUND OF THE INVENTION

In prior art, multiple design philosophies have been established in context with provision of systems which shall be able to ensure a predefined position or motion also in rough terrain or in context with unpredictable reaction forces or at high inclination or in an overhead arrangement. The present invention focuses on those philosophies departing from the idea that a unit or vehicle or any means of transportation should engage / interact in predefined manner with a predefined structure at a wall or at the ceiling (e.g., overhead cranes, wall crawling robots) e.g., in a storehouse or in a machinery hall. Some ideas of provision of reliable contact between the structure and the unit have already been published in context with diagnosis and parameter measurement in nearly inaccessible areas or systems (e.g., ductwork, canal systems), including magnetic adhesion/interference. Nonetheless, there is a need for systems being capable of providing, by interacting with a predefined structure, both a predefined traveling motion and a high accuracy in positioning (positional accuracy) in very reliable manner, preferably irrespective of the kind of underground or wall constitution, wherein the predefined structure should preferably be provided in very flexible and varied manner to many kinds of areas or different kinds of wall or ceiling contour/geometry.

The skilled person may differentiate between those units or vehicles which are provided for moving on the underground and those vehicles which are provided for moving along a ceiling or wall structure, especially since the latter have to be suspended in secure manner also, in order to avoid going down. Therefore, there might be different approaches as to the kinematics ensuring interaction/engagement at the structure's interface. The present invention focuses on interaction/engagement at/with ceiling or wall structures.

### SUMMARY OF THE INVENTION

It is an object of the invention to provide for a suspension arrangement which allows for reliable and accurate suspension/positioning/traveling of at least one crawler type vehicle at a ceiling or wall structure, especially for realizing variable two-dimensional tracks of motion of the crawler type vehicle, especially in combination with (conveyor/connecting) rails between structures. In particular, the object also includes providing for a suspension mechanism resp. suspension means allowing for securely suspending the crawler type vehicle e.g., also in context with load-carrying issues. In particular, the object may also include provision of an appropriate system or concept for reliably coupling one or a plurality of crawler type vehicles with the ceiling or wall structure, and also ensuring reliable positioning or even predefined paths of motion. Also, the object of the present invention may further include active driving methods for movably suspending such crawler type vehicles at the ceiling or wall structure, e.g. in context with logistic tasks.

The present invention solves this problem by providing a suspension arrangement comprising the features of independent claim 1. Advantageous refinements and embodiments of the device are derived from dependent claims 2-9. Furthermore, the problem is solved by a method according to claim 10.

According to a first aspect, the invention provides for a suspension arrangement exhibiting at least one crawler type vehicle and a structure extending in at least two spatial directions (x, y), wherein the structure comprises a plurality of profile units extending in a first spatial direction (x), wherein the structure defines at least one structural regularity in a second spatial direction (y), wherein the crawler type vehicle exhibits a plurality of suspension elements configured for suspending the crawler type vehicle and configured for coupling the crawler type vehicle to the structure by means of de-/coupling kinematics depending on a relative motion of the crawler type vehicle with respect to the structure in at least said second spatial direction (y), especially with the crawler type vehicle being configured to be moved in said first spatial direction (x) along the profile units irrespective of momentary motion in said second spatial direction (y), wherein the crawler type vehicle exhibit at least two drive units of a first kind and at least one joint, especially a ball joint.

The present invention provides for a suspension arrangement exhibiting at least one crawler type vehicle and a structure extending in at least two spatial directions, wherein the structure comprises a plurality of profile units (especially rails) extending (preferably continuously, especially without any structural discontinuity) in a first spatial direction, wherein the structure defines at least one structural regularity in a second spatial direction (thereby providing a one-dimensional raster with discrete coupling points distributed in at least one equidistant regularity in said second spatial direction). The profile units of one structure can also form curves, circles, or segments of circles, e.g., with the profile units pointing in φ-direction in cylindrical coordinates, wherein the profile units are arranged at equidistant radii or at equidistant positions in z-direction. The profile units can follow any shape or form as long as they are continuous (and essentially without kinks) and allow a structural regularity in the second spatial direction, i.e., the first spatial direction can change (continuously) depending on position in the structure.

The crawler type vehicle exhibits a plurality of suspension elements configured for suspending the vehicle and configured for coupling the crawler type vehicle to the structure by means of de-/coupling kinematics depending on a relative motion of the vehicle with respect to the structure in at least said second spatial direction, wherein the (crawler type) vehicle comprises means for providing for de-/coupling kinematics during a motion of the crawler type vehicle in said second spatial direction, especially with the crawler type vehicle being configured to be moved in said first spatial direction along the profile units irrespective of momentary motion in said second spatial direction. The at least one joint connects at least two drive units (of a first kind) comprising the suspension elements such that an angle between a first set of suspension elements and a second set of suspension elements is variable. This way, the sets of suspension elements always point in the second spatial direction independent of a possible curvature of the profile units.

According to the present disclosure, when it is referred to "structure", a structure that predominantly extends along a ceiling, a wall or on an inclined plane (or the like) is designated. The present invention is applied for vehicles being arranged at resp. traveling along a structure, and in addition, the present invention also allows for any motion along any structure with alternative orientation and/or arrangement. Thus, referring to a "structure" includes reference to any other "structure" exhibiting the features presently described allowing for coupling with/to the inventive vehicle and corresponding de-/coupling kinematics.

According to the present disclosure, when it is referred to "profile units" or "profiles" or "T-profiles", the disclosure also generally refers to different kinds of profiles like e.g. I-profiles or L-profiles which may provide for advantageous/favorable arrangements in individual applications. The profile units can e.g., be straight and arranged in parallel at defined distances (defining a regularity) or curves with a pitch between the profile units corresponding to the defined distances, such that a cross section always exhibits the same regularity.

The profile units respectively exhibit at least one tread, wherein each suspension element exhibits at least one element of motion (for gliding or rolling, especially at least one wheel) arranged and configured for actively or passively moving (especially gliding or rolling) the crawler type vehicle in said first spatial direction.

According to the present disclosure, when it is referred to "vehicle", the disclosure generally refers to crawler type vehicles or vehicles and its relative spatial arrangement or traveling motion (e.g., also possibly on the ground but predominantly on an inclined plane or at a wall). The crawler type vehicle can exhibit one or more load attachment points configured for connecting to a load to be carried/transported/moved along the structure in one- or two-dimensional manner.

According to the present invention, the term "drive unit" especially refers to a unit accommodating kinematics allowing for traveling motion of the vehicle, i.e., comprising the suspension elements and means for guiding the suspension elements, especially circumferential tracks .

The shape or dimension of the at least one first drive unit (and also of circumferential tracks) can be defined individually according to specific applications. E.g., the cross-section geometry of the at least one first drive unit is in the shape of a racecourse (parallel longitudinal sections and opposite semicircle sections). But, alternatively, the cross-section geometry can also be circular or elliptical for example.

The drive units of the first kind of the crawler type vehicle are connected via a joint, especially a ball joint, allowing for the drive units to change their angle with respect to each other in any direction. This allows the crawler type vehicle to follow curved profile units/rails. For example, each drive units exhibits its respective drive mechanism with a respective motor connected to it. However, it is also possible to control groups of drive units, especially all drive units of the first kind, with a common motor.

Preferably, the at least two first drive units are of the same length and in general suspended via mutual profile units with an offset in first spatial direction (x), but essentially without an offset in second spatial direction (y) between them. The joint, especially ball joint, is connected to the at least two first drive units e.g., at a respective center point, i.e., in the middle of the first drive units (in second spatial direction).

The crawler type vehicle can exhibit at least one motor/actuator for actively driving the crawler type vehicle along the structure.

The crawler type vehicle follows an intended direction resp. an intended path of motion, especially in conjunction with appropriate sensor-actor-arrangements.

The characteristic, that the suspension arrangement is configured for active motion of the vehicle / the vehicles includes all embodiments wherein the vehicle/s can move on its/their own. According to the present disclosure, "actively moving" designates a motion of the vehicle in relation to the structure actuated preferably by an electric motor of the vehicle connected to a drive unit such that the vehicle can move on its own inside the structure when the motor is activated. The choice of an appropriate motor can be carried out by the person skilled in the art in regard to existing motors and motor arrangements depending on the respective application / task / size of the respective crawler type vehicle.

According to one embodiment of the suspension arrangement, the crawler type vehicle or plurality of crawler type vehicles exhibits at least two circumferential tracks, wherein the suspension elements are attached to the circumferential tracks at predefined longitudinal positions corresponding to the structural regularity, wherein the circumferential tracks respectively define a specific path of circumferential motion of the respective suspension elements, thereby providing for de-/coupling kinematics during a motion of the crawler type vehicle in said second spatial direction (y).

According to the present disclosure, when it is referred to "circumferential track", the disclosure also generally refers to closed loop guidings and lines and predefined contours along which the suspension elements are guided and/or driven, e.g., chains or any such traction means providing for a closed loop.

The shape/contour of respective circumferential tracks can be individual, i.e., the skilled person can decide e.g., about a certain degree (radius) of curvature in specific sections of the respective circumferential track. For example, each track exhibits at least three different guide/rail sections, namely: a first (linear) section in which each suspension element is engaged with the profile, wherein the suspension element performs a linear motion; and at least one second (curved) section in which each suspension element performs a decoupling motion (wherein each track may exhibit two second sections being arranged oppositely); and a third (linear) section in which the suspension elements are returned to couple again with the profile (for continuous, circumferential motion and engagement process). Thereby, first and second tracks may define the trajectory of the respective free ends of the suspension elements especially exhibiting at least one element of motion, e.g., a wheel, being attached to the respective suspension element by any appropriate means (e.g. by a gliding/rolling contour, a chain drive, a timing belt, or any likewise mechanism or mechanical feature) which is configured for predefining a specific contour and for guiding the free ends resp. the rollers to follow that contour of the tracks.

The circumferential tracks respectively define a specific path of circumferential motion of the respective suspension elements (resp. of coupling means of the suspension elements, especially of a free end of the respective suspension element). Such configuration not only facilitates implementation in context with complex structures or in context with a plurality of vehicles to be used at the same time, but also considerably increases variability as to positioning. Thereby, the present invention also provides for practical scalability (both with respect to the structure and with respect to the number of vehicles), even in three-dimensional extension, if desired.

The crawler type vehicle can exhibit two or more kinds/types of suspension elements, wherein the different types of suspension elements are de-/coupled according to individual kinematics (especially in opposite directions/sides at the profile units, especially both in and opposite to the second spatial direction resp. travel direction of the crawler type vehicle), wherein a first subset of the suspension elements are attached to a first pair of circumferential tracks (resp. a subset of the first subset, momentary) and at least one further subset of the suspension elements are attached to a second pair of circumferential tracks (resp. a subset of the second subset, momentary) respectively at predefined first and second (further) longitudinal positions respectively corresponding to the structural regularity (resp. to the distance of the profile units defined by said structural regularity), wherein the first and second pairs of circumferential tracks provide for individual kinematics for the first and second subsets of suspension elements, especially such that the crawler type vehicle can be secured with respect to opposite sides/directions (of the second spatial direction) at the structure resp. at the profile units.

The crawler type vehicle can be configured for enabling at least one closed loop trajectory of respective suspension elements along corresponding circumferential tracks, especially configured for enabling at least two closed loop trajectories of at least two subsets of respective suspension elements.

The circumferential tracks can be shaped in such a manner that the respective suspension elements are de-/coupled from/into the structure when passing a curved section of the tracks.

For example, a subset of the suspension elements can be attached to one of the circumferential tracks (resp. a subset of the first subset, momentary) and at least one further subset of the suspension elements are attached to a further one of the circumferential tracks (resp. a subset of the second subset, momentary) respectively at predefined first and second (further) longitudinal positions respectively corresponding to the structural regularity, in particular with each suspension element being guided by a pair of circumferential tracks. The suspension elements can be fixedly attached/coupled by means of a first pulley to/with a/the first circumferential track and are guided within a/the second circumferential track by means of a second pulley respectively, wherein the first and second pulley preferably are arranged at a lever arm of the respective suspension element. For example, each suspension element can exhibit a first pulley and a second pulley arranged in longitudinal distance with respect to the first pulley at a lever arm of the respective suspension element, wherein the suspension element is coupled to a/the first and a/the second circumferential tracks via the first and second pulleys. E.g., each suspension element exhibits at least one wheel to roll on a tread of the profile unit a further wheel to roll on a side of the tread (side friction/rolling wheel) of the profile unit to reduce potential slip.

A respective subset of said suspension elements can be connected to each other by means of longitudinal connecting elements, especially by chain elements, thereby forming a closed loop of interrelated suspension elements distanced to each other in a/the predefined structural regularity.

The respective circumferential track e.g., exhibits a chain or is provided/defined by a chain forming a closed loop of interrelated chain elements.

The crawler type vehicle can be configured for lifting a/the respective suspension elements out of the structure in an unloaded state, especially such that both de-/coupling kinematics for a subset of momentarily unloaded suspension elements and suspension of the crawler type vehicle by a subset of momentarily loaded suspension elements can be ensured.

Each suspension element can be guided by a pair of circumferential tracks, wherein the crawler type vehicle exhibits at least three pairs of circumferential tracks each guiding a subset of the suspension elements, wherein said de-/coupling kinematics are predefined by said three pairs of circumferential tracks in such a manner that respective suspension elements (resp. a subset of the respective subset, momentary) simultaneously de-/couple both at a first side (resp. first longitudinal position) of a respective profile unit and at a second side (resp. second longitudinal position) of a respective profile unit, especially such that the crawler type vehicle is secured with respect to opposite sides/directions (of the second spatial direction) at the structure, especially with all suspension elements being guided in same circumferential direction, especially with all circumferential tracks being arranged in parallel to each other.

The crawler type vehicle exhibits at least one drive interacting with (resp. driving) at least one of the circumferential tracks, wherein the suspension arrangement is configured for a predefinable driven motion of the crawler type vehicle at least in said second spatial direction (especially back and forth).

The crawler type vehicle can also exhibit an energy storage unit providing energy to a/the at least one drive, preferably all drives, of the crawler type vehicle, especially to a/the at least one drive interacting with (resp. driving) at least one of the circumferential tracks.

The drive units (of the first kind) e.g., comprise a housing in which the two circumferential tracks are integrated, a chain of suspension elements to be guided along the circumferential tracks via pulleys, a driving mechanism such as a gear wheel interacting with the chain pulling the suspension elements, as well as a further chain of suspension elements arranged mirror-invertedly with a further housing accommodating further two circumferential tracks, with the further chain of suspension elements being also connected to the same driving mechanism via a further gear wheel arranged coaxially to the first gear wheel via a shaft. The crawler type vehicle/s can exhibit counter wheels. The counter wheels can also be connected to the return mechanism. For example, the counter wheels are connected to a further first drive unit exhibiting two circumferential tracks (see above), wherein the counter wheels exhibit two pulleys at a lever arm, each of the pulley being connected to an individual track, such that the counter wheels are guided along the circumferential tracks when the crawler type vehicle is moving in the second spatial direction. The counter wheels can also exhibit gear grooves to mesh with gear teeth in the structure. The counter wheels press against the profile units from the side of the crawler type vehicle, enhancing force fit/form fit coupling. This further enhances form fit (or force fit) coupling and is especially beneficial in applications with multiple structures with different orientations. The counter wheel unit preferably takes a shape corresponding to the shape of the drive units of the first kind (first drive units) such that it can easily be integrated between two first drive units, especially with a driving mechanism similar to (or the same) the driving mechanism of the first drive units sharing a common motor with the first drive units.

The structure can exhibit power rails integrated into the profile units and the crawler type vehicle/s can exhibit means for electrically connecting to the power rails.

For example, at least two of the suspension elements each comprise at least two electrically connected electrical contacts configured for establishing an electrical connection between the structure and the vehicle,
wherein the first electrical contact of a first suspension element for establishing an electrical connection is electrically connected to a first pole/phase of a power bus in the structure when the vehicle is coupled to the structure via the first suspension element and the first electrical contact of a second suspension element for establishing an electrical connection is electrically connected to a second pole/phase of the power bus in the structure when the vehicle is coupled to the structure via the second suspension element, and wherein the second electrical contacts of the suspension elements are each connected to a respective pole/phase of an internal bus of the crawler type vehicle at least when the vehicle is coupled to the structure via the suspension elements for establishing an electrical connection.

According to the present disclosure, "electrical contact" designates a connection mechanism that enables the flow of electrical current between two or more conductive elements. The primary objective of an electrical contact is to establish a reliable and efficient means of transferring electrical signals or power. The electrical contacts must possess certain key properties, such as high electrical conductivity, mechanical robustness, corrosion resistance, and thermal stability. Examples of suitable materials for electrical contacts may include copper, copper alloys, or noble metals like gold, silver, or platinum, as well as various alloys and composite materials. It is imperative that the connection between the electrical contact and the pole/phase in the structure be established in a reversible manner, allowing for repeated engagement and disengagement without compromising its performance. Examples of reversible electrical contact mechanisms include sliding contacts, where two surfaces slide against each other to establish and break the connection, or roller contacts, where rotating elements facilitate electrical contact.

The power rails can be integrated into the profiles of the structure, i.e., along the I-, L-, or T-profiles on one edge or side, preferably above the tread surface of the profile.

The vehicle can e.g., comprise electronics connected to the internal bus for supplying the vehicle with power. These electronics can comprise but are not limited to communication modules for wireless or wired data exchange (vehicle-to-vehicle, vehicle-to-infrastructure, vehicle-to-mobile devices, etc.), a/the central control unit, sensors (proximity sensors, accelerometers, LiDAR, radar, etc.), a power management system (power converters (AC/DC, DC/DC), battery management, voltage regulators, ESD protection), motors, etc. The vehicle can also comprise an energy storage, such as a battery pack and/or super capacitors and/or the vehicle can comprise electrical connection means for connecting to a load, wherein the load can be supplied with power via the electrical connection means.

For example, when the vehicle is moving in the second spatial direction, i.e., when suspension elements for establishing an electrical connection are coupled into the structure, the second sliders can be connected to the conducting rail such that the first slider has a defined potential before the first sliders are in proximity or connected to the power rail in the structure and when the suspension elements are decoupled from the structure, the first sliders are disconnected from the power rail before the second sliders are disconnected from the conducting rail. This measure serves to avoid spark creation, especially in the moment the suspension elements are brought into contact with the structure, by pulling the floating potential of the electrical contact to the potential of the power rail before. In an alternative example, when the suspension elements are coupled to the structure, the first sliders are connected to the power rail in the structure before the second sliders are in proximity or connected to the conducting rail in the vehicle and when the suspension elements are decoupled from the structure, the second sliders are disconnected from the conducting rails before the first sliders are disconnected from the conducting rail. This can reduce wear on the electric rails in the structure and shifts potential wear into the vehicle sliding contacts which are considered to be simpler to restore by maintenance actions.

For example, at least two conducting rails are placed in parallel at least to sections of the described circumferential tracks (see above), wherein at least two suspension elements for establishing an electrical connection comprise means for dis-/connecting from/to the conducting rails, when the suspension elements are de-/coupled from/into the structure. The conducting rails can be integrated into the vehicle particularly easily, when the first drive unit has a race-course shape, wherein the suspension elements that are currently coupled into the structure are following a straight or linear section. Arranging two conducting rails in parallel can mean to place them on opposite sides at the same height of the drive unit, on one side at different heights with respect to the plane in which the structure is extending, or on opposite sides at different heights. If only one first drive unit is used, it has proven beneficial to place the conducting rails on opposite sides, e.g., on two housings accommodating two circumferential tracks, parallel to sections of the tracks on each side. However, for scalability and easier integration process of more drive units, it can be beneficial to arrange two conducting rails at different heights on one side, because another drive unit, also exhibiting conducting rails in the same fashion could be integrated into the first drive unit in a mirror-inverted manner.

The suspension elements configured for establishing an electrical connection with the structure can exemplarily be distributed along the at least one first drive unit such that, when the vehicle is moving along the structure, a suspension element for the electrical connection of a respective pole/phase is coupled into the structure before an otherwise last/only suspension element connected to the respective pole/phase is decoupled from the structure . This helps to ensure an uninterrupted connection with the respective pole/phase while moving the vehicle on the structure. For example, every suspension element is configured for establishing an electrical connection with the structure. This can be beneficial for applications where a particularly high amount of power is to be transferred via the suspension elements because the current can be distributed over many suspension elements, reducing heat creation and wear of the components. Additionally, with this redundant configuration, a disconnect of single suspension elements would not result in a complete disconnection of the full vehicle. It is preferred that the whole structure exhibits poles/phases of the power bus. To ensure that at least two suspension elements are connected to at least one respective pole/phase of the power bus at all times, the vehicle and structure have to be coordinated such that there is always one suspension element of a corresponding pole/phase connecting to the bus in the structure by coupling the suspension element into the structure before the otherwise last suspension element that is currently connected to the same pole/phase in the structure gets disconnected from the bus from a decoupling process of the suspension element.

According to one embodiment of the suspension arrangement, the at least two drive units of the first kind are connected via a shaft enabling an inclination of the at least two drive units of the first kind, in particular with respect to one another, in all directions, especially varying in an angle and a length of the shaft, especially via universal joints combined with a splined shaft and/or a PTO shaft to a common motor. The drive units exhibit a driving mechanism e.g., gear wheels, connected via a shaft. In order to be able to follow curved profile units, the shaft needs to be variable in its length and the angle. Generally, any shaft fulfilling the criteria known to the skilled person can be used. Thus, using a splined shaft with universal joints or a PTO shaft is not to be interpreted as limiting. Using a common motor for the at least two drive units (preferably all drive units) simplifies the task of controlling the vehicles movement in the second spatial direction.

According to one embodiment of the suspension arrangement, the crawler type vehicle or group of crawler type vehicles exhibits a further (second) kind of drive unit configured for motion in first spatial direction (x), wherein the further (second) kind of drive unit comprises two holonomic wheelsets. The holonomic wheelsets each comprise at least two coaxially arranged holonomic wheels. According to the present invention, a holonomic wheel is a wheel whose wheel tread consists of rollers whose axes of rotation are at an angle to the axis of rotation of the main wheel. The absolute angle between the axes can for example be any angle between 5 and 90 degrees, especially 45 degrees. This angle has to be regarded when controlling the vehicle, since the movement of the first drive units and the second drive unit is not independent in the case that the angle of the rollers to the wheel is different than 90 degrees. An angle smaller than 90 degrees can result in advantageous configurations regarding the traction of the holonomic wheel with the profiles of the structure. In case the angle is smaller it is possible to place more rollers with the same diameter around the wheel, which enhances traction transmission and can compensate for gaps in the traction transmission of a single omniwheel. The holonomic wheel can e.g., be disc shaped and comprise a plurality of equally distributed rollers around its circumference, such that it allows for traction control in the first spatial direction and is not affected by a motion in the second spatial direction. The coaxially arranged holonomic wheels are e.g., disc shaped and have a thickness that is half the width of the profiles of the structure, such that there is room for at least two holonomic wheels of the holonomic wheelsets (especially each wheelset) to interact with at least one profile unit (rail) of the structure at all times. Each of the coaxially arranged holonomic wheels can have a predefined offset in the azimuthal direction with respect to their adjacent holonomic wheels. If one holonomic wheel comprises n rollers, that are equally distributed around the circumference of the wheel, each wheel is offset by 180/n degrees with respect to its neighbors. This way, it can be ensured that there is always at least one wheel of the wheelset in contact with the profile of the structure such that slip is prevented. The crawler type vehicle/s can exhibit a return mechanism. E.g., a holonomic wheelset can be connected to a return mechanism that applies a force to the holonomic wheel(s) pressing it/them against the structure. This configuration enhances traction of the holonomic wheel on the profiles (rails) of the structure and additionally ensures form fit in the case that the holonomic wheels exhibit gear grooves and the structure exhibits corresponding teeth. However, it is also possible to connect a return mechanism to parts of the suspension elements to also enhance force coupling.

According to a further embodiment, the holonomic wheelsets are connected to a differential, wherein a (further) motor engages in said differential. This allows for particularly reliable and easy way of controlling the movement of the vehicle/s in first spatial direction (x), no matter the curvature the vehicle might have to follow.

According to an alternative embodiment, the holonomic wheelsets are each connected to a respective motor. This increases complexity of controlling the vehicle because different rotation speeds on the inside and outside (with respect to the center point of the vehicle, i.e., in second spatial direction) have to be taken into account depending on curvature of the profile units. However this arrangement might be beneficial for applications that require a particularly high amount of power in first spatial direction.

According to one embodiment, the suspension arrangement comprises an additional structure, wherein the first structure and the second structure are connected via a conveyor/connector rail, wherein the conveyor/connector rail comprises at least two profile units with a fixed distance corresponding to the structural regularity (i.e., to the defined pitch, or to an integer multiple of the distance), wherein the conveyor/connector rail forms a continuous curvature. In other words: The rail/s can take any shape or form, as long as it is continuous and essentially not exhibiting kinks. The profile units must remain their orientation with respect to each other at all points of the conveyor/connector rails. The conveyor/connector rails comprise at least two profile units. However, using three or more profile units can enhance the stability of the arrangement and allow the crawler type vehicles to carry a higher load in certain applications, due to the distribution of the weight across a higher number of coupled suspension elements. For example, one structure is arranged in a first area of a factory hall for a first processing step, the crawler type vehicle is used to carry a product to be processed, and the second structure is arranged in a second area of the factory hall for a second processing step. When the product has completed the first processing step it can drive (or be driven, pulled, manually guided) over the conveyor/connector rail to the second structure and be further processed. This arrangement does not require the two structures to be parallel to one another. For example, a first structure is a ceiling structure (parallel to the ground) and the second structure lies in an inclined plane or is arranged at a wall. The conveyor/connector rail/s allow for smooth transition between structures with different orientations. According to the invention, a "connector rail" indicates a rail without further transportation means (such as a belt, or a chain) integrated into (or between) the profile units, where the vehicles must be able to actively drive along the rails. Accordingly, a conveyor rail indicates at least two profile units with additional means for pulling the crawler type vehicle/s along the profile units (in the first spatial direction(x)).

According to one embodiment, the crawler type vehicle or group of crawler type vehicles exhibits at least two independently controllable motors, wherein a first motor is configured for driving a motion in the first spatial direction (x) and at least one further (a second) motor is configured for driving a motion in the second spatial direction (y).

Each power unit, drive, motor and/or actuator of the vehicle can be coupled to a control unit of the vehicle.

The vehicle may exhibit two or three (or more) drive units (of the first kind) which can be arranged in predefined lateral distance to each other (e.g. defined/connected via cross-beams or the like), and each drive unit may exhibit at least one drive/motor for actively driving the suspension elements along the circumferential tracks or the vehicle in the second spatial direction, and these drives/motors can be controlled depending on each other, e.g. via the speed of rotation. Thus, a traveling direction can be controlled in combination with actively driven wheels of the suspension elements being driven along the profile rails of the structure. As described above, in some embodiments all drive units (of the first kind) can be controlled by one motor with at least one common shaft variable in length and angle (e.g., with universal joints and splined shaft). The suspension elements can e.g., be connected via a spur gear to a motor. The wheels of the suspension elements can also or alternatively exhibit gear grooves to interact with a corresponding contour integrated into a "bottom" side of the profile unit, wherein "bottom" indicates the side of the profile unit facing the crawler type vehicle. This allows form fit coupling and can be beneficial, especially at structures with a first spatial direction essentially pointing upwards (vertical).

The vehicle can exhibit at least one second kind of a drive unit configured for enabling locomotion of the crawler type vehicle in the first spatial direction, as described above. The first drive units of the vehicle can be scaled up in number, e.g., the vehicle exhibits three first drive units each being based on the same kinematic concept, but at least one of these drive units providing for mirror-inverted type/manner of de-/coupling kinematics. The second kind of drive unit can, e.g., comprise a holonomic wheel, or an elongated gearing wheel, that is able to be moved in the second spatial direction while moving the vehicle in the first spatial direction when driven.

The suspension arrangement can further comprise at least one route planning tool for route planning along the at least one structure.

Exemplarily, the at least one crawler type vehicle can exhibit a sensing device exhibiting at least one sensor from the following group: speed sensor, distance sensor, height and position measuring sensor, force sensor, acceleration sensor resp. gyroscope.

The suspension arrangement, especially the route planning tool, is configured for transmitting commands to a communication unit of the at least one crawler type vehicle, especially to the communication units of all crawler type vehicles individually, such that control units of the crawler type vehicles control their respective crawler type vehicle based on received commands as well as based on momentary measuring data of at least sensor. The communication unit can be configured for wireless communication at least within the suspension arrangement, wherein the (respective) crawler type vehicle or the suspension arrangement provides energy to the communication unit, especially such that the communication unit of the crawler type vehicle is energetically self-sustaining (autarkic) for at least a period of several days or weeks or month.

The suspension arrangement can be configured for localizing individual crawler type vehicles based on at least one locating signal transmitted by individual crawler type vehicles (passively or actively, e.g., passively based on at least one individual transmitter, especially based on individual identification features). Additionally, the crawler type vehicles transmit sensor data and information about destination floors to the at least one route planning tool when a request to do so is received in the communication unit of the crawler type vehicle.

According to one embodiment the suspension arrangement comprises two structures, wherein at least one of the structures exhibits curved profile units. This can e.g., increase flexibility or decrease wear on certain components and help integrate the structure according to a workflow. For example, a vehicle could only have a motor providing active motion in first spatial direction, and passive motion in second spatial direction.

According to an aspect, the invention also provides for a method of using a suspension arrangement, wherein a route-planning tool plans a path for at least one crawler type vehicle along at least one structure and/or from one structure to another, especially taking into account at least momentary positions and paths of at least one other crawler type vehicle also coupled to the at least one structure, wherein the crawler type vehicle moves omnidirectionally along the at least one structure. This increases autonomy and flexibility of the crawler type vehicle/s and allows the crawler type vehicle/s to take the shortest path to their destination.

Further advantages, features, and advantageous refinements of the invention are derived from the dependent claims and the following description of preferred embodiments with reference to the figures.

### BRIEF DESCRIPTIONS OF THE DRAWINGS

In the accompanying drawings, various aspects of suspension arrangements according to the invention are discussed.

Of the figures show
- **Fig. 1a, 1b**: exemplary suspension elements for de-/coupling crawler type vehicles with to/from structure;
- **Fig. 1c, 1d**: exemplary counter wheels for enhancing grip between crawler type vehicles and a structure;
- **Fig. 2a-2n**: kinematic aspects and details of a crawler type according to an embodiment of the invention suspended on a structure;
- **Fig. 3a, 3b**: a drive unit (of the first kind) of a crawler type vehicle according to one embodiment of the invention;
- **Fig. 3c, 3d**: an exemplary counter wheel unit;
- **Fig. 3e, 3f**: a first arrangement of drive units (of the first kind) and a counter wheel unit;
- **Fig. 3g, 3h**: a second arrangement of drive units (of the first kind) and a counter wheel unit;
- **Fig. 3i**: a side view of a drive unit (of the first kind) and a counter wheel unit coupled into a structure;
- **Fig. 4a, 4b**: an arrangement of drive units (of the first kind) with counter wheel units with a motor (and a housing);
- **Fig. 4c**: a crawler type vehicle according to a first embodiment;
- **Fig. 4d**: a crawler type vehicle according to a second embodiment;
- **Fig. 4e, 4f**: the crawler type vehicle according to the second embodiment in side-views;
- **Fig. 5a-5b**: a suspension arrangement according to embodiments of the invention with conveyor/connector rails;
- **Fig. 6**: a suspension arrangement according to one embodiment with a conveyor/connector rail;
- **Fig. 7**: a suspension arrangement according to one embodiment with two structures and a conveyor/connector rail;
- **Fig. 8**: details of a crawler type vehicle driving along a conveyor/connector rail;
- **Fig. 9**: a suspension arrangement according to one embodiment with a conveyor/connector rail;
- **Fig. 10**: a suspension arrangement according to one embodiment with two structures connected via a conveyor/connector rail;
- **Fig. 11**: a detail of a crawler type vehicle driving along a conveyor/connector rail.

### DETAILED DESCRIPTION OF THE DRAWINGS

The invention will now be described first in general for the inventive concept with reference to all drawings, before the drawings are described in detail.

The crawler type vehicles can exhibit at least one first drive unit 11 which may provide for accommodation of a crawling or driving mechanism 11.1 with motor(s), which allows for circumferential motion of suspension elements 13 along circumferential tracks 12, namely simultaneously along a first and a second circumferential track 12a, 12b, which tracks exhibit individual shapes/contours XZa, XZb. Preferably, the tracks only extend two-dimensionally (2D), i.e., in a plane, and the shape is different at least in curved sections 12r of the tracks. Each track 12a, 12b exhibits a parallel/linear section 12p (resp. two parallel sections) and at least one redirection/curved section 12r (resp. two curved sections). A lateral area resp. surface shell of the at one chassis or housing is preferably flat, plane, even, respectively on each lateral side. Such a configuration is favorable in view of interconnection of several housings 17 (side by side).

The crawler type vehicle 10 exhibits at least one further housing 17 (preferably in the same drive unit 11) exhibiting first and second circumferential tracks 12a, 12b and accommodating a plurality of further suspension elements 13b which are arranged mirror-inverted, with respect to the suspension elements 13 of the first housing 17. Both types of suspension elements 13, 13b can be arranged within the same drive unit 11, and optionally, both types of suspension elements 13, 13b can be guided by the same pair of circumferential tracks 12a, 12b. The drive unit 11 may actively provide for a traveling motion (e.g., by a synchronous guiding/driving motion of/to the suspension elements 13, 13b). Several first drive units 11a, 11b, 11c can be interconnected, e.g., via cross-beams or the like. The desired/required traveling motion can be controlled via a control unit which can be coupled to at least one motor 11.5. A drive section may also comprise at least one gear unit 18 configured for interacting with the track(s) and at least one energy storage unit. A sensor arrangement exhibiting at least one sensing device, e.g., comprising position sensors and velocity sensors and/or weight sensors and/or gyroscopes, may provide sensor data to the control unit.

Preferably, each suspension element 13, 13a, 13b exhibits a first pulley 13.1 and a second pulley 13.2, and optionally, at least one wheel 13.3 is provided at the free end of the suspension element 13 (bearing point/coupling point P13). The first and second pulleys are arranged on a lever arm 13.5 in distance from/to each other (y-offset, longitudinal extension y13 of lever arm); the bearing point P13 resp. the wheel 13.3 is arranged at a protruding section resp. suspension arm 13.6 (z-offset). At the free end of the suspension arm, optionally, a current collector resp. power-slider 13.4 (conductive slider for energy transfer) is provided in an arrangement geometrically corresponding to a/the power rail 1.3 of the respective profile unit 1.1. The plurality of suspension elements 13 of a/the respective first drive unit 11 can be interconnected via longitudinal connecting elements 15 which can ensure a closed loop 15a of interrelated suspension elements. The suspension elements 13 are coupled to the respective circumferential tracks.

In other words: The suspension elements preferably exhibit at least one wheel 13.3 performing a rolling motion on the profile units 1.1, preferably on the wheel tread 1.2 and preferably additionally on the side of the profile units, of the structure 1, allowing for a motion which is orthogonal to the motion predefined and evoked by the tracks 12, wherein the wheel 13.3 is positioned and aligned orthogonally with respect to the first and second pulleys 13.1, 13.2. Optionally, the wheel can be motorized e.g., by means of further actuators or motors. The first pulley 13.1 is engaged with the first or second circumferential track, thereby following the contour defined by said track; also, the second pulley 13.2 is engaged with the first or second circumferential track, thereby following said track (which is different from the track engaged by the first pulley, i.e., vice versa). The lever arm 13.5 is preferably L-shaped, especially provided as integral element in one piece (massive, solid).

The structure 1 and its raster 1a is defined by profile units 1.1 being arranged in parallel and with similar distance (pitch) to adjacent profile units. Each profile unit is preferably configured to support geometries/surface(s) which are adequate for interaction with the wheel(s) of the suspension elements (e.g. T-profile, C-profile, L-profile, I-profile), and a series of such profile units preferably provides for a planar surface or for a tubular surface at least in sections.

By means of the circumferential tracks 12a, 12b and the suspension elements 13, the (respective) first drive units 11, and the kinematics defined by the shape of the tracks provide for de-/coupling kinematics 20 which ensure both horizontal/vertical motion kinematics and non-circular pivot motion kinematics. Thereby, de-/coupling of each suspension element can be affected via circumferential motion along the tracks without the need of any axial telescopic motion within each suspension element, i.e., the respective suspension element can be designed as purely mechanic unit.

In the following, the kinematics provided by the guiding/driving motion along circumferential tracks is described in general, first:
The first pulley 13.1 of each suspension element 13 rotates about a first pulley axis and defines a first guiding point G13.1 (coupling the first track and the respective suspension element), and vice versa, the corresponding point of the corresponding circumferential track defines that first guiding point G13.1 for each suspension element. Likewise, the second pulley 13.2 of each suspension element 13 rotates about a second pulley axis (which is preferably aligned in parallel) and defines a second guiding point G13.2 (coupling the second track and the respective suspension element). When referring to the kinematics of each suspension element, an instantaneous center of rotation of each suspension element is defined by the axis of the first pulley 13.1 being coupled to the first track 12a, wherein coupling/attachment/fixation can be ensured e.g. at the axial section between a/the suspension arm 13.6 and the first pulley 13.1. The two tracks 12a, 12b are arranged with respect to another in such a manner that the contacting/bearing point/area P13 (coupling point) of the respective suspension element 13 can be hooked or hitched in the structure.

The wheel 13.3 of each suspension element rotates about a wheel axis which is preferably aligned orthogonally to the first and second pulley axis. Since each suspension element 13 is coupled to the tracks 12a, 12b in predefined positions, namely in a predefined first longitudinal position y12a via the first pulley 13.1 and in a predefined second longitudinal position y12b via the second pulley 13.2, when driving the tracks resp. when guiding the suspension elements along the tracks, the bearing point P13 at the free end of the suspension element 13 is guided according to the relative position/contour and distance of the corresponding tracks (of a pair of tracks guiding the respective suspension element).

The crawler type vehicle 10 may exhibit a control unit which can be a decentral (individual) control unit. Further, a respective crawler type vehicle 10 may exhibit a communicating unit (e.g., near field, mobile network, LAN, LP-WAN, SigFox, NBIoT) and/or a transmitter (active or passive), especially for transmitting locating signals. These components are configured to interact in/with a positioning system or route-planning tool.

The crawler type vehicle 10 can be configured to carry a load, which can be attached to the crawler type vehicle 10 at a connecting point. The load may comprise an identification feature, especially a code (e.g., including a number). Likewise, each crawler type vehicle 10 may comprise an identification feature, especially a code (e.g., including a number).

A digital twin referring to a respective crawler type vehicle 10 and/or a digital twin referring to a respective load can be stored in a database of a route-planning tool. The database is configured for storing and accessing the at least one digital twin at least comprising information of momentary status, wherein the suspension arrangement is configured to define at least one control parameter for individual crawler type vehicles based on information of the at least one digital twin.

In the figures, (x) designates a/the first spatial direction (especially cross direction, especially direction of longitudinal extension of profile units), and (y) designates a/the second spatial direction (especially longitudinal direction or momentary driving direction of the crawler type vehicle), and (z) designates a/the third spatial direction.

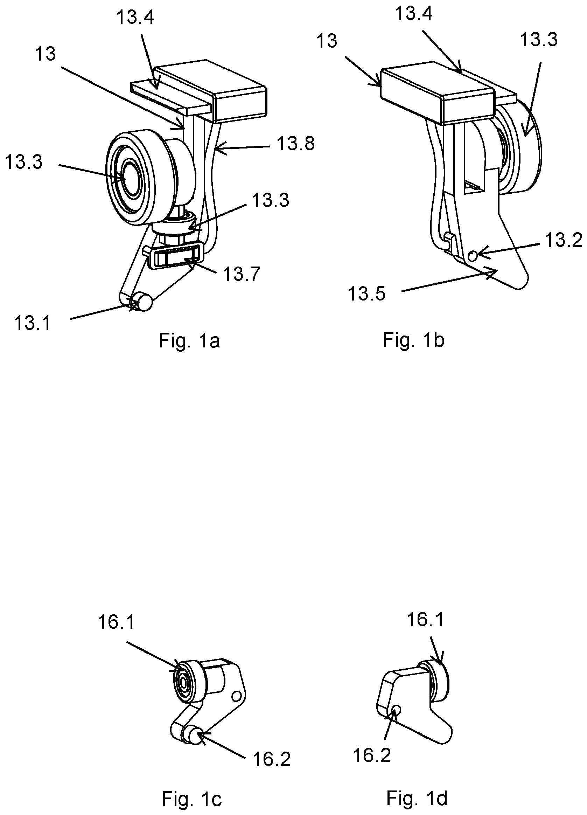

In Fig. 1a and 1b, a suspension element 13 is shown in an isolated view from a "front" and "back" side. A first pulley 13.1 intended to be pulled along a circumferential track 12, 12b is shown. The suspension element 13 exhibits two elements of motion 13.3, a first wheel to roll on a wheel tread 1.2 of a profile unit 1.1, and a second wheel to roll on a side of the wheel tread 1.2. Additionally, the suspension element 13 exhibits a first electrical contact ("current collector") 13.4 to connect to a power line 1.3 integrated into the structure 1 and a second electrical contact 13.7 electrically connected to the first electrical contact 13.4 via a wire 13.8 to provide power to an internal bus of a crawler type vehicle 10.

**Fig. 1c** and **1d** show wheels 16.1 of a counter mechanism 16, wherein the wheels 16.1 push on a "bottom" side of a profile unit 1.1 further enhancing force fit coupling between the crawler type vehicle 10 and the structure 1. Similar to the suspension elements 13, the counter wheels 16.1 exhibit pulleys 16.2 intended to be pulled via a chain/belt 16a and guided along a circumferential track to follow a predefined path of motion. Preferably, a crawler type vehicle 10 exhibits at least one first set of suspension elements 13 with a first orientation, at least one second set of suspension elements of suspension elements 13b facing in opposite direction (mirror-inverted) and at least one set of counter wheels 16, such that a "T"-shaped profile unit can be clamped between the wheels from all (six) sides, i.e., both sides (top and bottom) of the wheel tread as well as a side of the wheel tread. "Top" and "bottom" in this case are the sides facing away from the crawler type vehicle and towards the vehicle respectively and do not limit the crawler to be used in a ceiling arrangement. The clamping of the profile unit (preferably from all sides) allows vehicles to switch between structures exhibiting different orientations (e.g., being arranged at a wall, a ceiling, the floor).

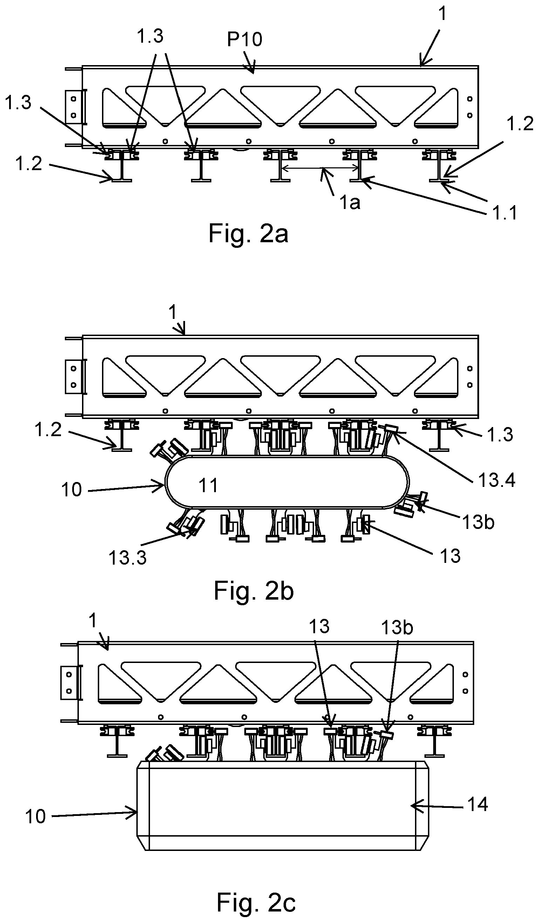

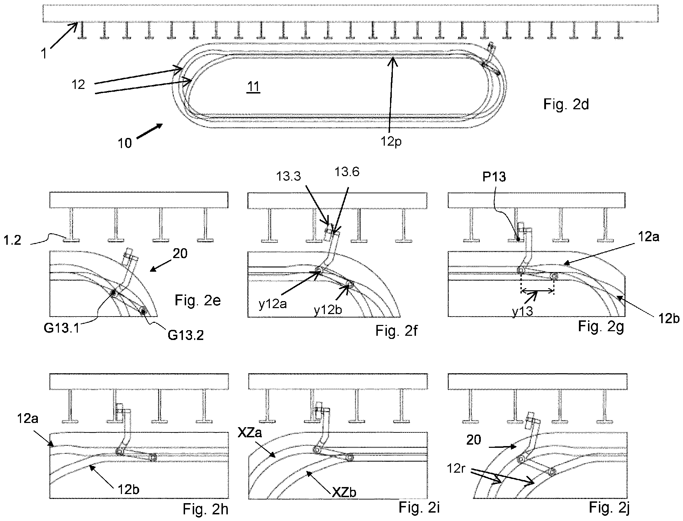

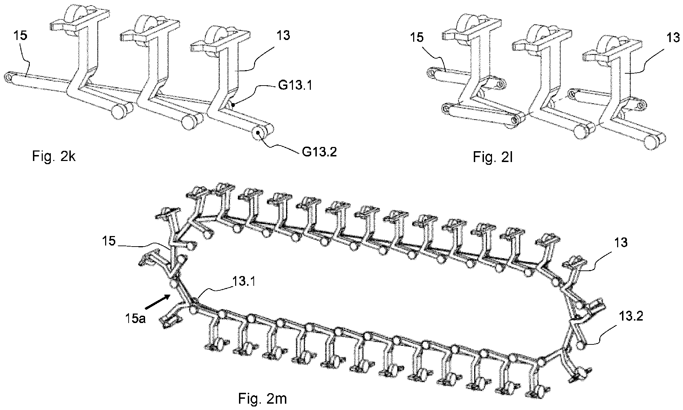

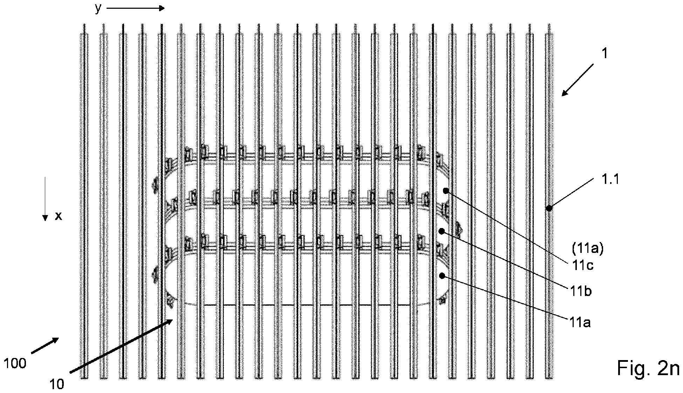

In conjunction with appropriate sensor-actor-arrangements, not shown here, the crawler type vehicle 10 can follow an intended direction resp. an intended path of motion in the structure shown in **Fig. 2****.** Fig. 2a shows a cross-section of a energy charging area P10. The profile units 1.1 respectively exhibit treads 1.2, wherein suspension elements 13 exhibit at least one wheel 13.3 for gliding or rolling, arranged and configured for moving the crawler type vehicle 10 in the first spatial direction (x). The crawler type vehicle 10 enables two closed loop trajectories of at least two subsets of respective suspension elements, as can be seen in **Fig. 2d****-j.** The circumferential tracks 12, 12a, 12b are shaped in such a manner that the respective suspension elements 13 are de-/coupled from/into the structure 1 when passing a curved section 12r of the tracks 12a, 12b. One subset of the suspension elements 13 is attached to one of the circumferential tracks (resp. a subset of the first subset, momentary) and one further subset of the suspension elements 13 are attached to a further one of the circumferential tracks (resp. a subset of the second subset, momentary) respectively at predefined first and second (further) longitudinal positions respectively corresponding to the structural regularity 1a, with each suspension element being guided by a pair of circumferential tracks. The suspension elements 13 are fixedly attached/coupled by means of a first pulley 13.1 to/with a/the first circumferential track 12a and are guided within a/the second circumferential track 12b by means of a second pulley 13.2 respectively, wherein the first pulley 13.1 and the second pulley 13.2 are arranged at a lever arm 13.5 of the respective suspension element 13. A respective subset of said suspension elements 13 is connected to each other by means of longitudinal connecting elements 15 (chain elements) forming a closed loop of interrelated suspension elements 15a distanced to each other in the predefined structural regularity 1a, as can be seen in **Fig. 2k****-m.** The crawler type vehicle 10 in **Fig. 2b** exhibits two kinds/types of suspension elements 13a, 13b, wherein the different types of suspension elements 13 are de-/coupled according to individual kinematics (here, in opposite directions/sides at the profile units 1.1, both in and opposite to the second spatial direction (y) resp. travel direction of the crawler type vehicle 10), wherein a first subset of the suspension elements 13a are attached to a first pair of circumferential tracks 12a, 12b (resp. a subset of the first subset, momentary) and at least one further subset of the suspension elements 13b are attached to a second pair of circumferential tracks 12a, 12b (resp. a subset of the second subset, momentary) respectively at predefined first and second (further) longitudinal positions y12a, y12b respectively corresponding to the structural regularity 1a (resp. to the distance of the profile units defined by said structural regularity), wherein the first and second pairs of circumferential tracks 12a, 12b provide for individual kinematics for the first and second subsets of suspension elements 13a, 13b, especially such that the crawler type vehicle 10 can be secured with respect to opposite sides/directions (of the second spatial direction) at the structure 1 resp. at the profile units 1.1.

In **Fig. 2n****,** each suspension element 13, 13b is guided by a pair of circumferential tracks 12a, 12b, wherein the crawler type vehicle 10 exhibits at least three pairs of circumferential tracks 12a, 12b, each guiding a subset of the suspension elements 13, 13b, wherein said decoupling kinematics are predefined by said three pairs of circumferential tracks 12a, 12b in such a manner that respective suspension elements 13a, 13b (resp. a subset of the respective subset, momentary) simultaneously de-/couple both at a first side (resp. first longitudinal position) of a respective profile unit 1.1 and at a second side (resp. second longitudinal position) of a respective profile unit 1.1, especially such that the crawler type vehicle 10 is secured with respect to opposite sides/directions (of the second spatial direction) at the structure 1 with all suspension elements 13a, 13b being guided in same circumferential direction with all circumferential tracks 12 being arranged in parallel to each other. The vehicle exhibits three (first) drive units 11a, 11b, 11c, wherein two of the drive units 11, 11 c comprise suspension elements 13 with a first orientation, and the drive unit 11b in the middle exhibits suspension elements with mirror-inverted orientation. The crawler type vehicle 10 exhibits at least one motor 11.5 (not shown here) interacting with at least one of the circumferential tracks 12. The crawler type vehicle 10 also exhibits an energy storage unit (also not depicted) providing energy to a/the at least one motor of the crawler type vehicle 10. As can be seen in **Fig. 2b****,** the exemplary crawler type vehicle 10 also exhibits electrical contacts 13.4 to connect to a power line 1.3 in the structure 1. The power line can be AC or DC, and additionally provide for a communication bus, i.e., powerline communication. To improve safety and electromagnetic shielding of the crawler type vehicle 10, the crawler type vehicle 10 in **Fig. 2c** exhibits a protective casing 14.

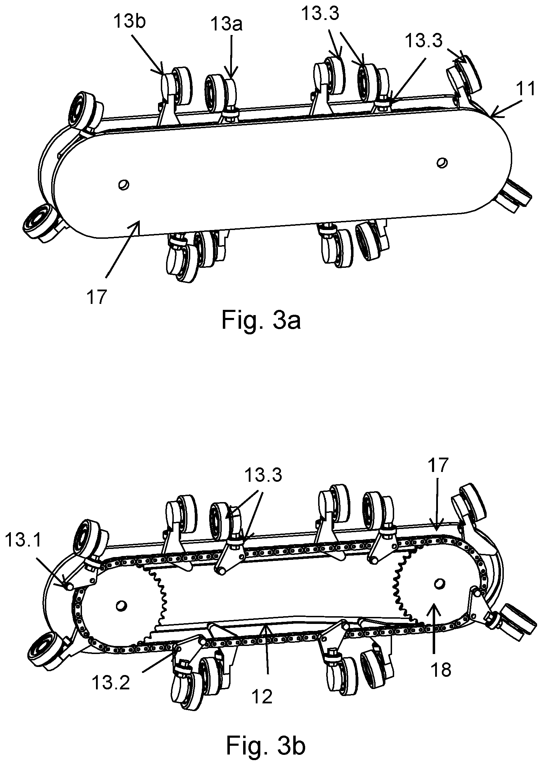

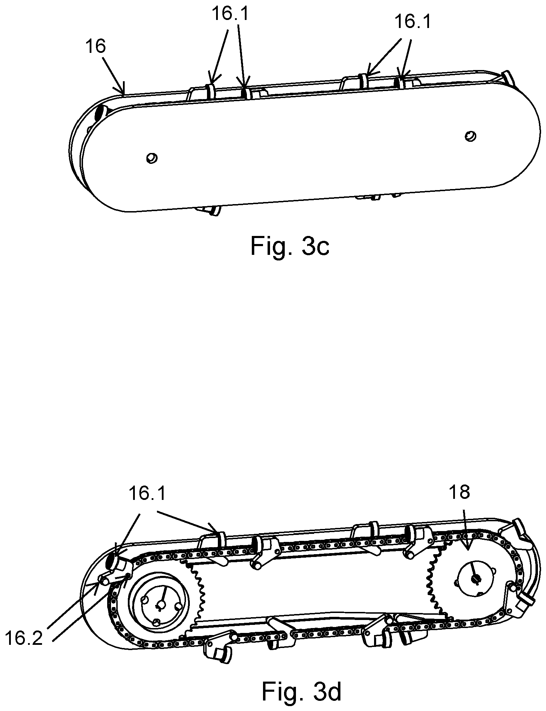

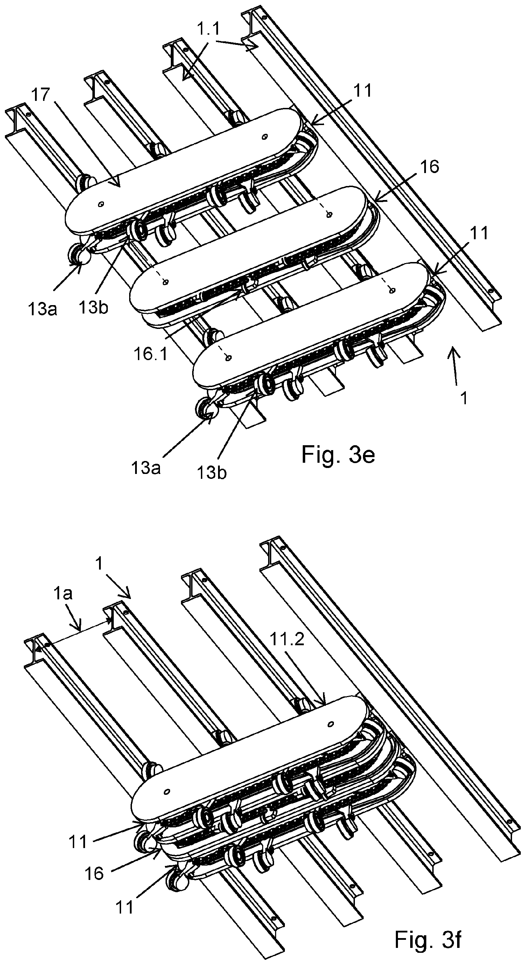

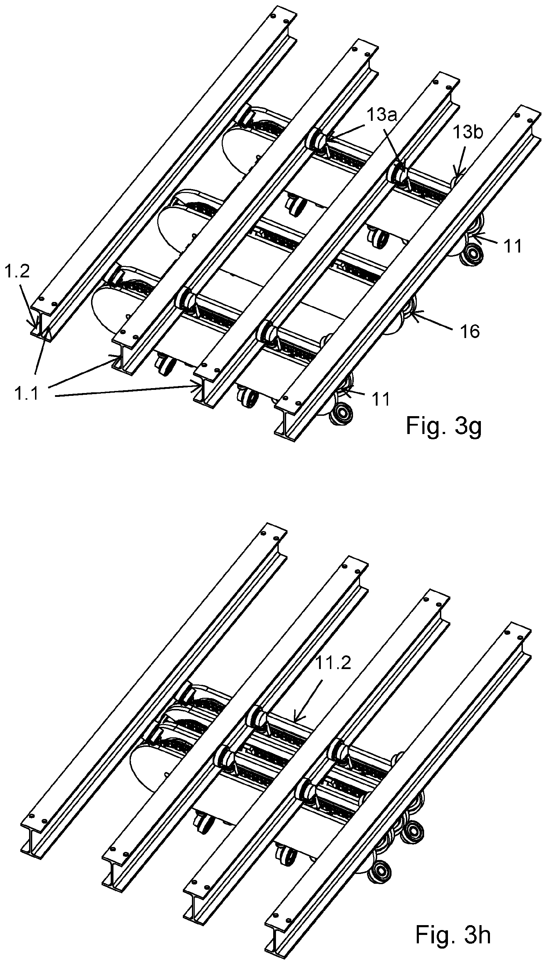

The (first) drive unit 11 shown in **Fig. 3a** exhibits suspension elements 13, 13b of the kind described in Fig. 1a, 1b but without the electrical contacts. The electrical contacts being hidden in the remaining figures is for easier interpretation and clarity only. A first set of suspension elements 13 is facing in a first direction, while a second set of suspension elements 13b is facing in a second direction, opposite to the first direction. The (first) drive unit 11 comprises two circumferential tracks 12a, 12b for each set of suspension elements 13, 13b (i.e., in total four circumferential tracks), as described with respect to Fig. 2d-2m. The second housing 17 exhibiting the two circumferential tracks 12a, 12b for the second set of suspension elements 13b is hidden in **Fig. 3b** to show how the suspension elements 13, 13b can be connected to a common chain 15a (e.g., via pulleys 13.1 of both sets of suspension elements 13, 13b) which can be driven by a gear unit 18 connected to a motor 11.5. **Fig. 3c** and **Fig. 3d** show a further unit 16 (counter unit) guiding counter wheels 16.1 for also contacting profile units 1.1 from a "bottom" side with the same shape as the first drive unit 11. The counter wheels 16.1 alone cannot suspend/fix the crawler type vehicle 10. The counter wheels 16.1 only serve as a counter mechanism to push against the structure 1 to increase the force coupling between the suspension elements 13 and the structure 1. The counter wheels 16.1 also exhibit pulleys 16.2 via which they are pulled along two circumferential tracks to follow a predefined motion. Two (first) drive units 11 exhibiting two sets of suspension elements 13a, 13b respectively being arranged mirror-inverted to grasp a profile unit 1.1 from two sides, as well as two sets of counter wheels 16.1, are shown in **Fig. 3e** and **Fig. 3f****.** The drive units from Fig. 3e and 3f are shown from a diagonally above perspective in **Fig. 3g** and **Fig. 3h****.** The drive units 11 are connected to form a (first) drive arrangement 11.2 comprising two (first) drive units 11 and a counter unit 16. The drive arrangement 11.2 can be driven via a common shaft connected to the gear units 18 of the drive units 11 and counter unit 16 as shown in Fig. 3b and Fig. 3d. The mirror-inverted set of suspension element 13b is hidden behind the profile unit 1.1 in Fig. 3g and 3h. It is preferred to always have at least one set of mirror-inverted suspension elements 13b in order to enhance coupling security with the structure 1.

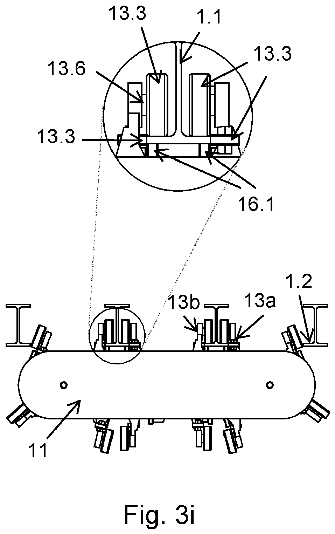

In addition to the two elements of motion 13.3 at the free ends of the suspension elements 13, 13b which couple the crawler type vehicle 10 to the structure 1 from the "top" side of the wheel tread of the profile units 1.1 as well as from the side of the wheel tread 1.2, which is not necessarily as thin as shown in the figures, but can also be wider in order to build the elements of motion 13.3 connecting to the side of the wheel tread bigger to allow for heavier loads to be lifted by a crawler type vehicle 10, especially in structures 1 being arranged at a wall. In **Fig. 3i****,** a side view of a (first) drive unit 11 of a crawler type vehicle 10 coupled via a subset of suspension elements 13, 13b to the structure 1 is shown. In total, six wheels 13.3, 16.1 clamp the "T"-shaped profile unit 1.1 such that slip is minimized.

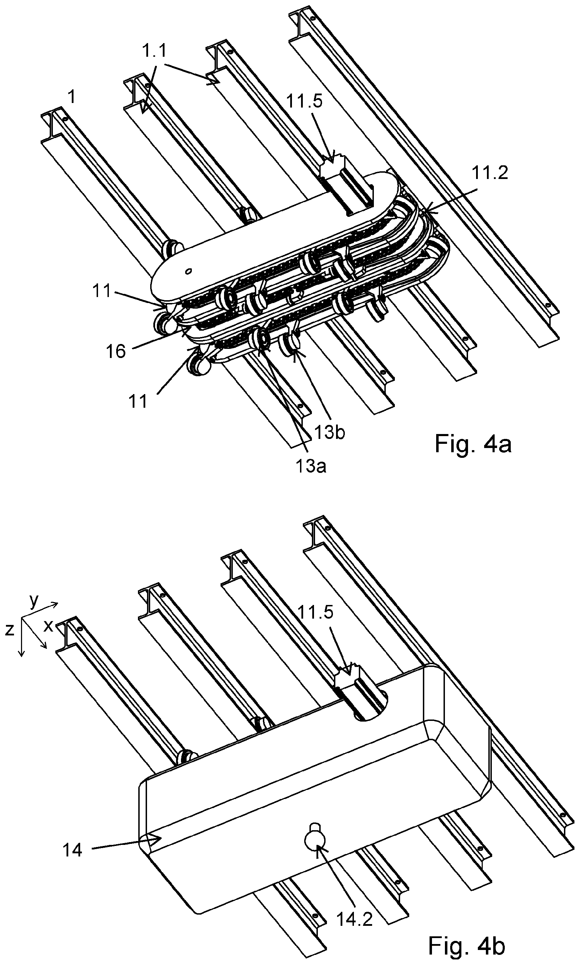

The (first) drive units 11 from Fig. 3e and Fig. 3f form a first drive arrangement with a common motor 11.5 in **Fig. 4a****.** To enhance protection (for and from the surroundings) an additional casing 14 is shown in **Fig. 4b****.** The casing 14 exhibits a ball 14.2 of a ball joint 14.1 in the center of the drive arrangement (both in first (x) and second (y) direction). The (first) drive units 11a, 11b of the first drive arrangement 11.2 may need some flexibility even though they are very close together in order to follow curved profile units 1.1. A short splined shaft with a universal joint (not shown) can exemplarily be used to account for the small changes in angle between the (first) drive units 11 (of one first drive arrangement) when the vehicle 10 is following curved profile units 1.1 (in first spatial direction (x)).

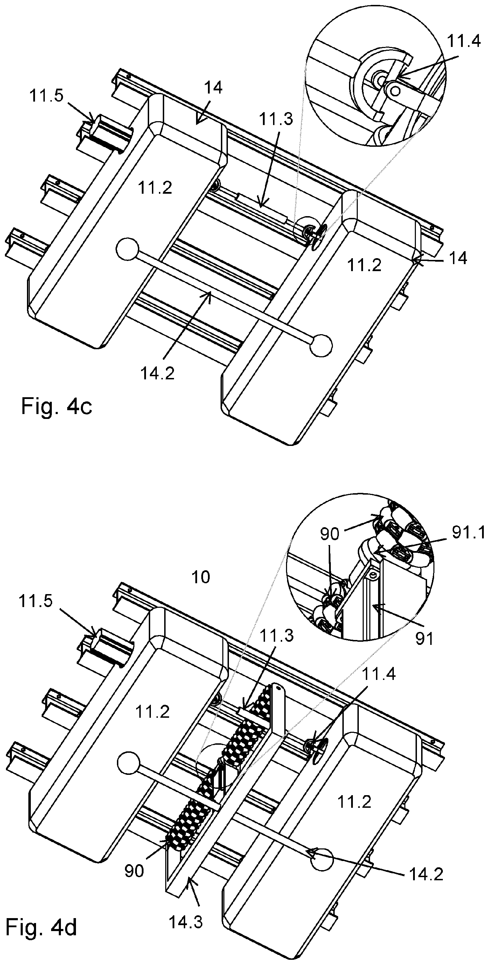

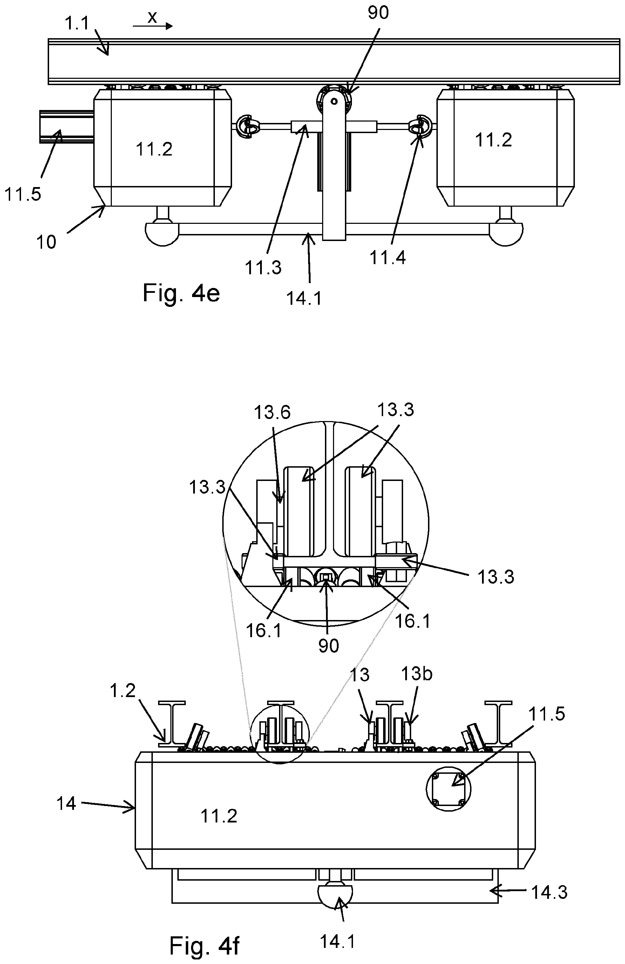

**Fig. 4c** shows a crawler type vehicle 10 according to one embodiment. The crawler type vehicle 10 exhibits two arrangements 11.2 of the type shown in Fig. 4b. It is however also possible to only use one (first) drive unit 11 for each of the arrangements 11.2. The two casings 14 of the arrangements 11.2 are coupled via a ball joint 14.1. The ball joint 14.1 preferably connects to a framework 14.3 of the vehicle 10 as shown in **Fig. 4d****.** The (first) drive units 11 of the two drive arrangements 11.2 are connected via a drive mechanism 11.1 comprising a splined shaft 11.3 with universal joints 11.4, a close-up view of which can be found in Fig. 4c. Additionally, two holonomic wheelsets 90 are shown in Fig. 4d. A motor 91 engages in a differential 91.1 connected to the holonomic wheelsets 90. The motor 91 and the holonomic wheels 90 are connected to the vehicle framework 14.3 in the middle between the two drive arrangements 11.2. **Fig. 4e** shows the crawler type vehicle 10 from a side-view perspective (from the second spatial direction). **Fig. 4f** shows the suspension elements 13, 13b of the crawler type vehicle 10 clamping the profile unit 1.1. The holonomic wheelsets 90 can be pressed against the profile units 1.1 from the bottom side (side facing the vehicle) with an additional return mechanism 90.1 not shown here.

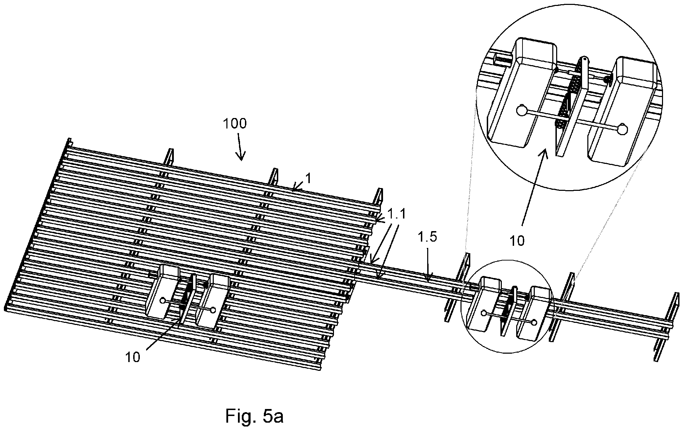

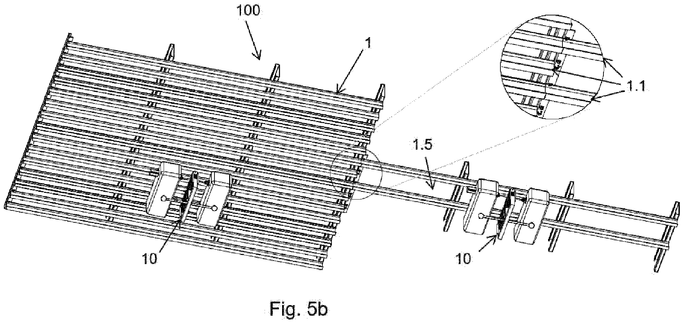

**Fig. 5a** shows a first suspension arrangement 100 according to an embodiment. The suspension arrangement 100 comprises a structure 1 with a crawler type vehicle 10 suspended in the structure 1. A first conveyor/connector rail 1.5 leads out of the structure 1 e.g., to a further structure 1'. The first conveyor/connector rail 1.5 comprises two directly adjacent profile units 1.1. However, as shown in **Fig. 5b****,** a second conveyor/connector rail 1.5 comprises two profile units 1.1 further spaced apart. As long as the vehicle is wide enough to be coupled into both of the at least two profile units of the conveyor/connector rail 1.5 when driving along the conveyor/connector rail 1.5, the profile unit can be spaced apart any integer multiple of the pitch of the structural regularity 1a. Using profile units 1.1 further spaced apart for the conveyor/connector rail 1.5 can increase the stability of the crawler type vehicle 10 when driving along the conveyor/connector rail 1.5, especially in curved sections.

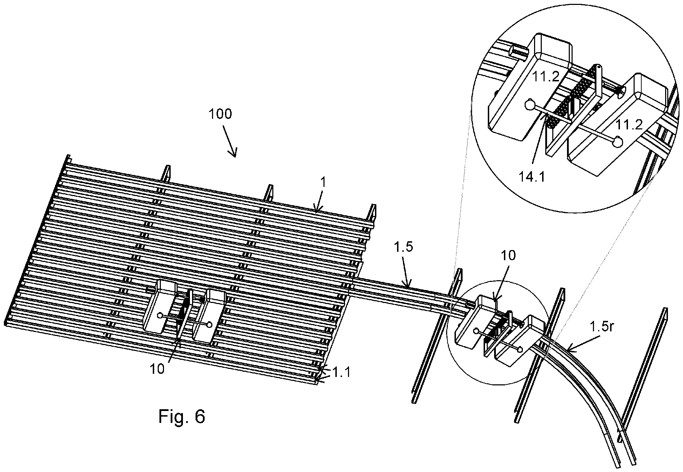

**Fig. 6** shows a further suspension arrangement 100 comprising a structure 1 and a crawler type vehicle 10 of the kind described in Fig. 4d to Fig. 4f. A conveyor/connector rail 1.5 describing a curve 1.5r leads out of the structure 1. A crawler type vehicle 10 driving along the curve 1.5r is also shown in a close-up view. The crawler type vehicle 10 is able to follow the curved conveyor/connector rail 1.5 due to the (first) drive units 11 (resp. the drive arrangements 11.2) being able to deviate from their original parallel orientation because of the ball joint 14.1 connecting the at least two (first) drive units (here connecting the casings 14 of the drive arrangements 11.2 comprising multiple drive units 11a, 11b and possibly also a counter unit 16).

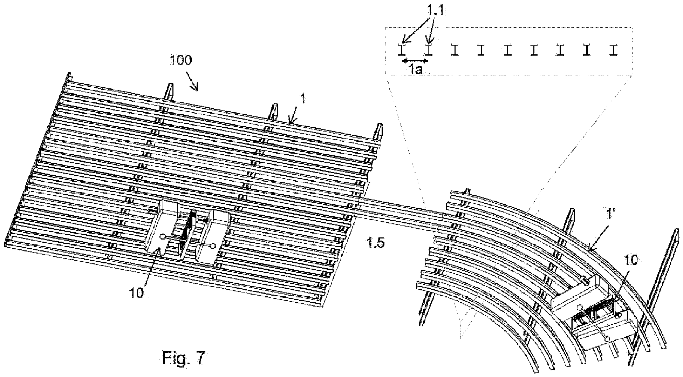

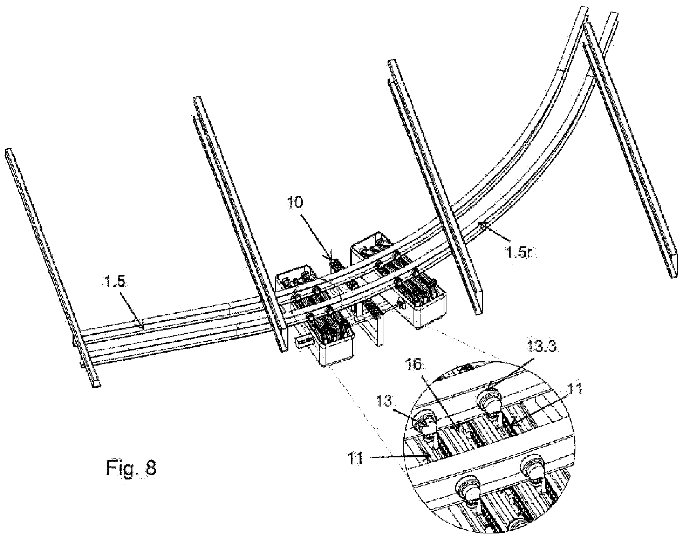

In **Fig. 7****,** a suspension arrangement 100 according to a further embodiment is shown. The suspension arrangement 100 comprises two structures 1, 1', wherein one of the structures 1' comprises curved profile units 1.1, a conveyor/connector rail 1.5 and two crawler type vehicles 10. The profile units 1.1 must follow a continuous curve, essentially without kinks. As indicated by the close-up view of a cross-section of the structure 1 exhibiting curved profile units 1.1, the profile units always have to exhibit the structural regularity 1a in second spatial direction (y) (depending on orientation of the first spatial direction (x), essentially always orthogonal to the first spatial direction (x)) such that a coupling as shown in Fig. 3i is always ensured. Thus, the crawler type vehicle 10 is able to move (or to be moved) in the first spatial direction (x) (right or left along the curved profile units) irrespective of momentary motion in second spatial direction (y). The orientation between the at least two drive units 11 (of the first kind) changes depending on the position of the vehicle in the structure 1' exhibiting curved profile units 1.1, i.e., the farther out (with respect to the radius of the curve) the vehicle 10 is in the structure 1, the smaller is the angle between the orientations of the drive units (of the first kind). The details of a crawler type vehicle 10 following a curved conveyor/connector rail 1.5r is shown in **Fig. 8** from a perspective view from diagonally above. The suspension elements 13 engage in the same manner with the profile units 1.1 as in Fig. 7 in the structure exhibiting the curved profile units 1.1. The suspension elements 13 of the (first) drive units 11 couple to the profile units 1.1 via the elements of motion 13.3 (preferably first wheel and side wheel (see Fig. 3i), preferably from both sides of the profile unit 1.1 via mirror-inverted suspension elements 13 not shown here).

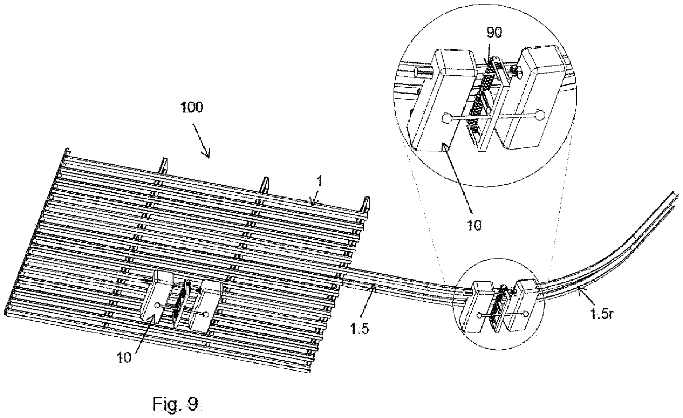

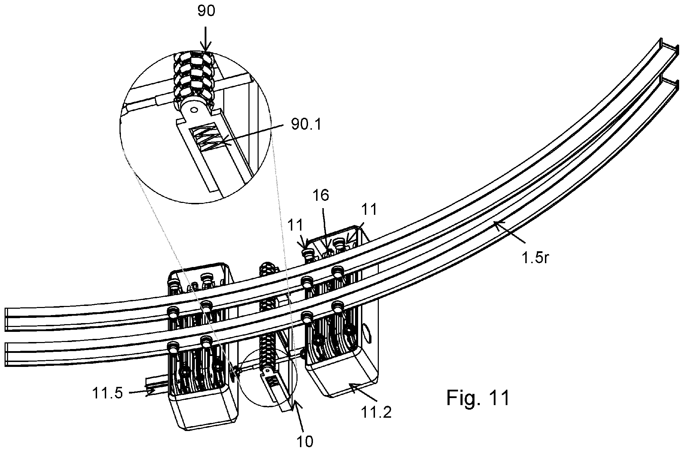

In **Fig. 9****,** a further suspension arrangement 100 is shown, wherein the suspension arrangement 100 comprises a structure 1, two crawler type vehicles 10 and a conveyor/connector rail 1.5 leading out of the structure 1. The conveyor/connector rail 1.5 (from the perspective of the (x, y)-plane described by the structure 1) leads upwards on a curve 1.5r out of the plane defined by the structure 1. In this configuration, it is important to ensure good (force fit) coupling between the crawler type vehicles 10 and the structure 1 or conveyor/connector rails 1.5. As indicated in the close-up view, the crawler type vehicle 10 exhibits a return mechanism 90.1 connected to the vehicle framework 14.3 and the holonomic wheelsets 90. In **Fig. 11****,** the crawler type vehicle going upwards on the conveyor/connector rail 1.5 is shown in a perspective view from diagonally above. A close-up view further shows the return mechanism 90.1 applying a force onto the two holonomic wheelsets 90. The ball joints 14.1 of the crawler type vehicle 10 allow for the (first) drive units 11 to be tilted with respect to each other in any direction, i.e., not only left-right, but also up-down thus allowing the crawler type vehicle 10 to follow parallel profile units 1.1 going upwards/downwards, left/right as well as any combination thereof.

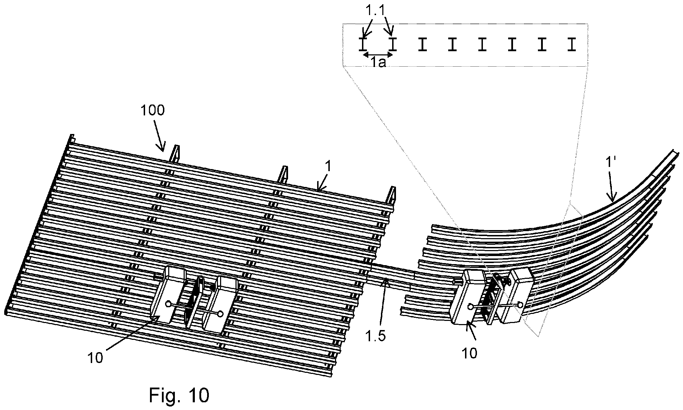

**Fig. 10** shows a further suspension arrangement 100 according to an embodiment. The suspension arrangement 100 exhibits two structures 1, 1' connected via a conveyor/connector rail 1.5 and two crawler type vehicles 10. One of the structures 1' exhibits curved profile units 1.1 describing a segment of a tube-like shape. As indicated in the cross-section here, the profile units 1.1 define the same structural regularity 1a in the second spatial direction (y) as before (see Fig. 3i). Thus, the crawler type vehicle 10 is able to move (or to be moved) in the first spatial direction (x) (upwards or downwards the curved profile units) irrespective of momentary motion in second spatial direction (y).

The embodiments shown here are merely examples of the present invention and should not be construed as limiting. Alternative embodiments considered by those skilled in the art are equally encompassed within the scope of the present invention.

### List of reference signs:

- 1, 1': structure
- 1a: structural regularity or raster defined by the structure
- 1.1: profile unit, especially T-profile resp. T-rail
- 1.2: wheel tread
- 1.3: power rail
- 1.5: conveyor/connector rail
- 1.5r: curve
- 10: crawler type vehicle
- 11: drive unit, especially chain drive
- 11.1: drive mechanism
- 11.2: drive arrangement
- 11.3: shaft, especially splined shaft
- 11.4: universal joint
- 11a: first drive
- 11b: further (second) drive
- 11c: further (third) drive
- 12: circumferential track
- 12a: first circumferential track, especially comprising a chain
- 12b: second circumferential track
- 12p: parallel section / linear section of the track
- 12r: redirection section / curved section of the track
- 13: suspension element resp. chain element
- 13a: first suspension element resp. chain element (first type)
- 13b: further suspension element (second type, especially mirror-inverted)
- 13.1: first pulley
- 13.2: second pulley
- 13.3: wheel
- 13.4: first electrical contact, especially current collector resp. power-slider (conductive slider for energy transfer)
- 13.5: lever arm
- 13.6: protruding section / suspension arm
- 13.7: second electrical contact
- 13.8: wire
- 14: casing
- 14.1: ball joint
- 14.2: ball
- 14.3: vehicle framework
- 15: longitudinal connecting element, especially chain element
- 15a: closed loop of interrelated suspension elements, especially chain
- 16: counter unit
- 16.1: counter wheel
- 16.2: pulley
- 16a: counter wheel chain
- 17: housing
- 18: gear unit
- 20: de-/coupling kinematics
- 90: holonomic wheelset
- 90.1: return mechanism
- 91: motor
- 91.1: differential
- 100: suspension arrangement
- G13.1: first guiding point or axis (coupling the first track and the suspension element)
- G13.2: second guiding point or axis (coupling the second track and the suspension element)
- P10: energy charging point/position
- P13: contacting/bearing point/area of the suspension element with the structure
- XZa: shape/contour of the first circumferential track
- XZb: shape/contour of the second circumferential track
- y12a: predefined first longitudinal positions
- y12b: predefined second longitudinal positions
- y13: longitudinal extension of lever arm
- x: first spatial direction: direction of longitudinal extension of profile units
- y: second spatial direction: longitudinal direction resp. alignment of the circumferential tracks
- z: third spatial direction, especially vertical direction

## Claims

1. Suspension arrangement (100) exhibiting at least one crawler type vehicle (10) and a structure (1, 1') extending in at least two spatial directions (x, y), wherein the structure (1, 1') comprises a plurality of profile units (1.1) extending in a first spatial direction (x), wherein the structure (1, 1') defines at least one structural regularity (1a) in a second spatial direction (y), wherein the crawler type vehicle (10) exhibits a plurality of suspension elements (13, 13a, 13b) configured for suspending the crawler type vehicle (10) and configured for coupling the crawler type vehicle (10) to the structure (1, 1') by means of de-/coupling kinematics depending on a relative motion of the crawler type vehicle (10) with respect to the structure (1, 1') in at least said second spatial direction (y), especially with the crawler type vehicle (10) being configured to be moved in said first spatial direction (x) along the profile units (1.1) irrespective of momentary motion in said second spatial direction (y), wherein the crawler type vehicle (10) exhibits at least two drive units (11) and at least one joint, especially a ball joint (14.1).

2. Suspension arrangement (100) according to claim 1, wherein the crawler type vehicle/s (10) exhibit/s at least two circumferential tracks (12, 12a, 12b), wherein the suspension elements (13, 13a, 13b) are attached to the circumferential tracks (12, 12a, 12b) at predefined longitudinal positions corresponding to the structural regularity (1a), wherein the circumferential tracks (12, 12a, 12b) respectively define a specific path of circumferential motion of the respective suspension elements (13, 13a, 13b), thereby providing for decoupling kinematics during a motion of the crawler type vehicle (10) in said second spatial direction (y).

3. Suspension arrangement (100) according to any of the preceding claims, wherein the at least two drive units 11 are connected via a shaft enabling an inclination of the at least two drive units 11 in all directions, especially in an angle and a length of the shaft, especially via universal joints 11.4 combined with a splined shaft 11.3 and/or a PTO shaft to a common motor 11.5.

4. Suspension arrangement (100) according to any of the preceding claims, wherein the crawler type vehicle/s (10) exhibit/s a further kind of drive unit configured for motion in first spatial direction (x), wherein the (further) kind of drive unit comprises two holonomic wheelsets 90.

5. Suspension arrangement (100) according to claim 4, wherein the holonomic wheelsets 90 are connected to a differential 91.1, wherein a motor 91 engages in said differential 91.1.

6. Suspension arrangement (100) according to claim 4, wherein the holonomic wheelsets 90 are each connected to a respective motor 91.

7. Suspension arrangement (100) according to any of the preceding claims, further comprising an additional structure (1'), wherein the first structure (1) and the second structure (1') are connected via a conveyor/connector rail (1.5), wherein the conveyor/connector rail (1.5) comprises at least two profile units (1.1) with a fixed distance corresponding to an integer multiple of the structural regularity (1a), and/or wherein the conveyor/connector rail (1.5) forms a continuous curvature.

8. Suspension arrangement (100) according to any of the preceding claims, wherein the crawler type vehicle/s (10) exhibit/s at least two independently controllable motors (11.5, 91), wherein one motor (91) is configured for driving a motion in the first spatial direction (x) and the at least one other motor (11.5) is configured for driving a motion in the second spatial direction (y).

9. Suspension arrangement (100) according to any of the preceding claims, wherein the suspension arrangement (100) comprises two structures (1, 1'), wherein at least one of the structures (1, 1') exhibits curved profile units (1.1).

10. Method of using a suspension arrangement (100), wherein a route-planning tool plans a path for at least one crawler type vehicle (10) along at least one structure (1, 1') and/or from one structure (1, 1') to another, especially taking into account at least momentary positions and paths of at least one other crawler type vehicle (10) also coupled to the at least one structure (1, 1'), wherein the crawler type vehicle (10) moves omnidirectionally along the at least one structure (1, 1').
